Europäisches Patentamt

**European Patent Office**

**Office européen des brevets**

(11) Publication number: **0 492 921 A2**

# EUROPEAN PATENT APPLICATION

(21) Application number: **91311661.2**

(51) Int. Cl.⁵: **F16L 19/065**

(22) Date of filing: **16.12.91**

Claim 13 is deemed to be abandoned due to non-payment of the claims fee (Rule 31 (2) EPC).

(30) Priority: **22.12.90 GB 9027971**

(43) Date of publication of application:
**01.07.92 Bulletin 92/27**

(84) Designated Contracting States:
**AT BE CH DE DK ES FR GB GR IT LI LU MC NL SE**

(71) Applicant: **E. PEART & COMPANY LIMITED**
**P.O. Box 46, Dunkirk Lane**
**Hyde, Stockport, Cheshire SK14 4PN (GB)**

(72) Inventor: **Jardine, Robert William**
**116 Vernon Road**
**Poynton, Cheshire SK12 1YR (GB)**
Inventor: **Hodge, Ian Stuart**
**18 Osprey Close, Heron Lodge**
**Dukinfield, Cheshire SK16 5BQ (GB)**

(74) Representative: **Ajello, Michael John**
**207 Moss Lane**
**Bramhall, Stockport, Cheshire SK7 1BA (GB)**

(54) **A pipe coupling.**

(57) A pipe coupling comprising a tubular sleeve (10) having flared ends (11) to receive tapered resilient sealing rings (12) which seal internally against the walls of two pipe ends (20, 21) to be coupled, with clamping rings 16 at opposed ends of the coupling which are drawn together by bolts (19) to cause the sealing rings (12) to be compressed and to form a seal both internally and externally. Pipe 21 is smaller in diameter than pipe 20, so that the associated sealing ring 12 must also be of reduced diameter. A metal support ring (23) having an internal diameter equivalent to the outer diameter of the smaller pipe (21) prevents the material of the smaller sealing ring (12) from being extruded along the pipe wall.

FIG.1

EP 0 492 921 A2

THIS INVENTION concerns pipe couplings of the kind used to connect plain-ended water or gas pipes and consisting essentially of a tubular sleeve having one or both ends flared to provide a tapered internal sealing face, a resilient sealing ring having a complementary tapered outer face and a cylindrical inner face, and a clamping ring to be drawn axially towards the sleeve thus to compress the sealing ring into contact with the sleeve and with the outer wall of a pipe.

A disadvantage of pipe couplings of the kind described is that the range of pipe sizes which may be successfully sealed using a particular size of coupling is restricted, there being a tolerance typically of about 15mm.

For many applications, pipes are available in many nominal sizes and so to manufacture and maintain a stock of couplings suitable for all pipe sizes is economically unsound.

It is not sufficient merely to increase the radial depth of a resilient sealing ring to accommodate smaller pipes since the rubber or other resilient material of the ring depends upon the surrounding metal parts for support, and if the pipe is undersized there might be insufficient support for the rubber which can thus tend to be extruded axially along the pipe wall when the clamping ring is tightened.

An object of the present invention is to provide a pipe coupling including optional means to enable a coupling to be used with an undersized pipe whilst maintaining adequate support for the sealing ring when the coupling is tightened.

According to the present invention a pipe coupling comprises a tubular sleeve having at least one end flared to provide a tapered internal sealing face, a resilient sealing ring having a complementary tapered outer face, a cylindrical inner face and a radially directed outer end face, a clamping ring having cylindrical and radial parts which respectively surround at least a part of said tapered outer face and at least part of said radially directed outer end face of the sealing ring, and means for tightening the clamping ring in an axial direction to force the sealing ring towards and against the tapered internal sealing face of the sleeve, characterised by at least one annular ring of substantially non-resilient material positioned, in the assembly of the coupling, between the outer end face of the sealing ring and the radial part of the clamping ring and extending radially inwardly from the outer peripheral region of the sealing ring to a sufficient extent to prevent the latter from being extruded axially along a pipe wall when the clamping ring is tightened.

Embodiments of the invention will now be described, by way of example only, with reference to the accompanying drawings, in which:-

Fig. 1 is an exploded part-sectional view of a coupling made in accordance with one embodiment of the invention;

and Fig. 2 is a sectional view of one end region of a coupling made in accordance with another embodiment of the invention.

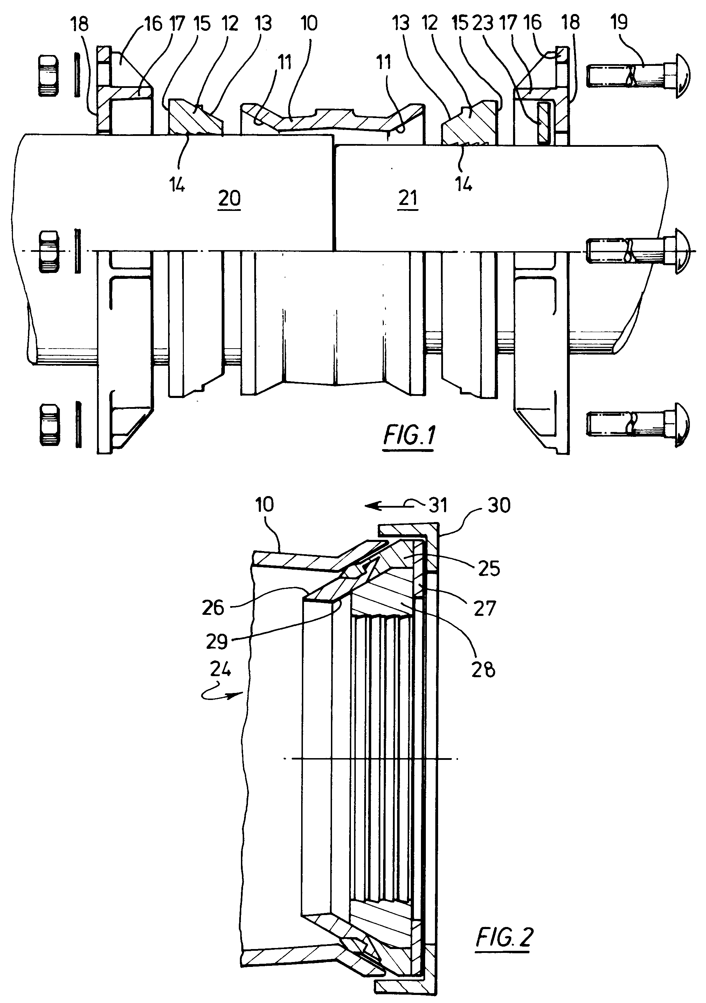

Referring initially to Fig. 1, in which the left hand end of the coupling is constructed to accommodate a pipe of a diameter equivalent to the coupling the device comprises a central tubular sleeve 10 having axially opposed flared ends to provide tapering internal sealing faces 11, resilient sealing rings 12 having complementary tapered outer faces 13, generally cylindrical inner faces 14 and radially directed end faces 15.

Axially beyond each sealing ring 12 is a clamping ring 16 having cylindrical and radial parts 17 and 18 respectively which when the clamping rings at the two ends of the coupling are drawn together by bolts 19, support and force the resilient sealing rings 12 into sealing engagement with the adjacent sealing faces 11 externally and against the pipe walls internally.

As illustrated in Fig. 1 the coupling, in this case, is adapted to receive, at the left-hand end, a pipe 20 having an outer diameter just less than the inner diameters of the tubular sleeve 10 and of the radial part 18 of the associated (left-hand) clamping ring 16. The left-hand sealing ring 12 is of a similar diameter thus to fit closely around the circumferential wall of the pipe 20.

At the right-hand end of Fig. 1 there is illustrated the case when a pipe 21 of smaller diameter than the pipe 20 is introduced into the coupling and is thus a loose fit within sleeve 10 and within the radial part 18 of the associated (right-hand) clamping ring 16. In this case, there is illustrated a right-hand sealing ring 12 which is of smaller diameter than the equivalent sealing ring at the left-hand end of the coupling, and the smaller diameter sealing ring provides a close fit around the circumferential wall of the smaller diameter pipe 21.

In the example illustrated in Fig. 1, when the clamping rings 16 are drawn together there would be a tendency for the resilient material of the right-hand sealing ring 12 to be extruded outwardly between the inner extremity of the radial part 18 of the right-hand clamping ring 16, and the wall of the pipe, but for the inclusion of a steel backing ring 23 whose inner profile is designed to fit close to the pipe wall thus avoiding the risk of extrusion of the material of the sealing ring. It is found that little or no extrusion of the sealing ring into the sleeve 10 occurs owing to the existence of the tapered internal sealing face 11.

Referring now to Fig. 2, in an alternative arrangement when a coupling is to be used on a pipe whose diameter again is significantly less than that for which the coupling was designed, an adaptor ring generally indicated at 24 is provided. This consists of a rubber ring 25 moulded to accept two axially spaced metal rings 26 and 27. The outer peripheral profile of the adaptor ring 24 is similar to that of the rubber sealing ring normally fitted to the particular size of coupling.

The inner profile of the adaptor ring is designed to accept the correct rubber sealing ring for the smaller size of pipe to be coupled. Metal rings 26 and 27 may be bonded to rubber ring 25, or supplied separately.

The usual inner rubber sealing ring 28, similar to ring 12 in Fig. 1 is located within the adaptor ring 24 and is selected to fit the pipe to be coupled.

The outer metal ring 27 extends radially inwardly from the outer peripheral region of the ring 25 to such an extent that it supports a substantial part of the outer end face of sealing ring 28, as in the case of Fig. 1, whilst inner ring 26 provides a tapered inner face 29 to support the outer conical face of ring 28.

To assemble the coupling, the adaptor ring 24 is initially fitted into the flared end of the coupling body, and the smaller sealing ring 28 is fitted inside the adaptor ring.

As the coupling is tightened by drawing clamping ring 30 (similar to clamping ring 16 in Fig. 1) in the direction of arrow 31, the outer metal ring 27 is moved towards the coupling sleeve together with sealing ring 28 and adaptor ring 24. An outer peripheral seal is provided by the outer conical face of rubber ring 25 against the sealing face of the coupling sleeve, and an inner seal is provided against the pipe wall by the inner circumferential face of ring 28. Metal rings 26 and 27 combine to support the two rubber rings sufficiently to prevent the inner part of ring 28 from being extruded axially along the pipe wall. The metal rings maintain compression against the rubber rings to provide an effective seal both inwardly and outwardly.

Whilst the component parts of the adaptor ring 24 may be supplied as three separate members, it is preferable for them to be bonded or otherwise maintained in an assembled form since couplings of this kind are usually installed in difficult situations and so a one-piece adaptor facilitates the assembly.

In an alternative arrangement the rubber ring 25 of the adaptor ring itself may be of sufficient radial extent to obviate the need for the separate standard rubber sealing ring 28.

Typically, the rubber parts will be of a material suitable for potable water applications, or for gas, as the case may be, and the metal parts may be produced from ductile iron. If required, the rubber ring 25 may be of a softer material than ring 28.

It will be appreciated that with a number of different sized adaptor rings and internal rubber sealing rings, a considerable range of pipe sizes may be accommodated using a single coupling body thus reducing the number of sizes of coupling needed to be held in stock.

## Claims

1.  A pipe coupling comprising a tubular sleeve having at least one end flared to provide a tapered internal sealing face, a resilient sealing ring having a complementary tapered outer face, a cylindrical inner face and a radially directed outer end face, a clamping ring having cylindrical and radial parts which respectively surround at least a part of said tapered outer face and at least part of said radially directed outer end face of the sealing ring, and means for tightening the clamping ring in an axial direction to force the sealing ring towards and against the tapered internal sealing face of the sleeve, characterised by at least one annular ring of substantially non-resilient material positioned, in the assembly of the coupling, between the outer end face of the sealing ring and the radial part of the clamping ring and extending radially inwardly from the outer peripheral region of the sealing ring to a sufficient extent to prevent the latter from being extruded axially along a pipe wall when the clamping ring is tightened.

2.  A pipe coupling according to Claim 1, wherein said non-resilient annular ring extends inwardly to be a close fit around the circumference of a pipe having substantially the same diameter as the inner diameter of the resilient sealing ring.

3.  A pipe coupling according to Claim 1 or Claim 2, wherein said tubular sleeve has two opposed flared ends each equipped with a resilient sealing ring and a clamping ring, there being means for drawing the two opposed clamping rings together to close and seal the coupling.

4.  A pipe coupling according to Claim 3, wherein the two opposed resilient sealing rings have mutually different internal diameters but mutually similar external diameters.

5.  A pipe coupling according to any preceding claim, including an adaptor ring comprising an outer resilient sealing ring having outer and inner conical faces and moulded to accept two axially spaced metal rings generally at its two axial ends respectively, the outer resilient ring being adapted internally to accept an inner resilient sealing ring whose internal diameter is selected to be equivalent to a pipe to be coupled.

6.  A pipe coupling according to Claim 5, wherein at least one of the two metal rings is bonded to the outer resilient ring for ease of assembly of the coupling.

7.  A pipe coupling according to Claim 5 or Claim 6, wherein one of the metal rings extends radially inwardly from the outer peripheral region of the inner resilient ring to such an extent that it supports a substantial part of the outer end face of the latter.

8. A pipe coupling according to any one of Claims 5-7, wherein the inner metal ring provides a tapered inner face to support the outer conical face of the inner resilient sealing ring.

9. A pipe coupling according to any one of Claims 5-8, wherein the component part of the adaptor ring are bonded or otherwise maintained in assembled form so as to provide a one-piece adaptor to facilitate assembly of the coupling in difficult situations.

10. A pipe coupling according to any one of Claims 5-9, wherein the outer resilient ring of the adaptor ring as of sufficient radial extent to obviate the need for a separate inner resilient sealing ring.

11. A pipe coupling accordilng to any one of Claims 5-10, wherein the metal parts of the adaptor ring are produced from ductile iron.

12. A pipe coupling according to any one of Claims 5-9, wherein the outer resilient ring of the adaptor ring is of softer material than the inner resilient sealing ring.

13. A pipe coupling substantially as hereinbefore described, with reference to and as illustrated in Fig. 1 or Fig. 2 of the accompanying drawings.

FIG.1

FIG.2